# EUROPÄISCHE PATENTSCHRIFT

(11) **EP 2 668 085 B1**
(45) Veröffentlichungstag und Bekanntmachung des Hinweises auf die Patenterteilung: **07.10.2015**
(21) Anmeldenummer: 12700304.4
(22) Anmeldetag: 10.01.2012
(51) Int. Cl.: B62D 1/184

(54) **FESTSTELLEINRICHTUNG ZUM FESTSTELLEN EINER LENKSPINDELLAGEREINHEIT**
FIXING DEVICE FOR FIXING A STEERING SPINDLE BEARING UNIT
DISPOSITIF DE VERROUILLAGE EN POSITION POUR VERROUILLAGE EN POSITION D'UN ENSEMBLE PALIER DE COLONNE DE DIRECTION

(30) Priorität: 25.01.2011 DE 102011000319
(43) Veröffentlichungstag der Anmeldung: 04.12.2013
(73) Patentinhaber: ThyssenKrupp Presta Aktiengesellschaft, 9492 Eschen (LI)
(72) Erfinder: SCHNITZER, Rony, FL-9491 Ruggell (LI); HEITZ, Thomas, FL-9493 Mauren (LI)
(74) Vertreter: Fechner, Thomas
(86) Internationale Anmeldenummer: PCT/EP2012/000071
(87) Internationale Veröffentlichungsnummer: WO 2012/100905

(56) Entgegenhaltungen:
- EP-A1- 0 802 104
- EP-A1- 0 887 245
- EP-A2- 1 435 317
- WO-A1-2006/118054

## Beschreibung

Die vorliegende Erfindung betrifft eine Feststelleinrichtung gemäß dem Oberbegriff des Patentanspruchs 1.

Feststelleinrichtungen werden bei verstellbaren Lenksäulen für ein Kraftfahrzeug dazu eingesetzt, die verstellbare Lenksäule für den Normalbetrieb des Fahrzeuges in der eingestellten Position festzustellen bzw. zu arretieren. Befindet sich die Feststelleinrichtung bzw. deren Spanneinrichtung in einem Öffnungszustand, so kann das an der verstellbaren Lenksäule angebrachte Lenkrad in die vom Fahrer des Kraftfahrzeuges gewünschte Position in Höhen- und/oder Längsrichtung verstellt werden. Solche Feststelleinrichtungen werden beim Stand der Technik auch als Klemmsysteme bezeichnet. Es gibt Feststelleinrichtungen, die auf formschlüssigem Eingriff von Arretierelement und Gegenarretierelement beruhen. Es gibt aber auch Feststelleinrichtungen, bei denen Arretierelement und Gegenarretierelement in der Schließstellung der Spanneinrichtung ausschließlich mittels reibschlüssiger Klemmung miteinander in Wirkverbindung stehen. Beim Stand der Technik ist die reibschlüssige Klemmung z. B. aus der EP 0 802 104 A1 bekannt. Bei reibschlüssigen Klemmungen besteht das Problem darin, eine ausreichende Festigkeit und Widerstandsfähigkeit der Verbindung gegen eine Verschiebung der Lenksäule im Betrieb des Kraftfahrzeuges zu erreichen. Insbesondere soll in vielen Fällen auch im Crashfall eine hohe Festigkeit der Verbindung sichergestellt sein. Gleichzeitig soll aber auch eine einfache Verstellmöglichkeit in der Öffnungsstellung der Spanneinrichtung gegeben sein. Dabei ist im Allgemeinen bevorzugt, dass die Verstellung der Lenksäule in Höhen- und/oder Längsrichtung kontinuierlich erfolgen kann. In der EP 0 802 104 A1 wird vorgeschlagen, mehrere Reibflächen zu verwenden, um entsprechend die Reibkraft zu erhöhen. Die DE 196 43 203 A1 zeigt beispielhaft die beim Stand der Technik bekannte formschlüssige Verbindung mittels Verzahnungseingriff. Bei dieser Technologie bestehen jedoch ebenfalls verschiedene Probleme. Einerseits kann nicht jede Verstellposition eingestellt werden und andererseits besteht immer das Risiko, dass beim Schließen der Feststelleinrichtung die Spitzen der zueinander korrespondierenden Verzahnungen aufeinander stoßen und entsprechend kein sicherer Eingriff erfolgt. Ein weiterer Nachteil solcher formschlüssiger Lösungen mit Verzahnungseingriff besteht darin, dass in der Öffnungsstellung der Spanneinrichtung durch besondere Mittel eine leichtgängige reibschlüssige Klemmung der Lenksäule bewirkt werden muss, damit diese nicht klappert und leichtgängig verstellbar ist.

Eine andere Feststelleinrichtung ist in der DE 10 2007 003 091 B3 gezeigt. Bei dieser Ausführungsform gemäß des Standes der Technik wird der formschlüssige Eingriff von Arretierelement und Gegenarretierelement wiederum mittels Verzahnung erreicht, wenn die Spanneinrichtung in der Schließstellung ist. In der Öffnungsstellung der Spanneinrichtung wird das Arretierelement mittels federarmartiger elastischer Rückstellelemente aus der Verzahnung des Gegenarretierelementes herausgehoben. Auf diese Weise soll einerseits sichergestellt werden, dass relativ hohe Haltekräfte bereitgestellt werden können. Andererseits soll für den Fall des Auftretens sehr hoher Kräfte, beispielsweise im Falle eines Fahrzeugcrashes, eine formschlüssige Verbindung über die randseitige Verzahnung zwischen Arretierelement und Gegenarretierelement bewirkt werden. Die in der DE 10 2007 003 091 B3 gezeigte Ausgestaltungsform hat die oben bereits genannten Nachteile eines Verzahnungseingriffs. Insbesondere kann es beim häufigen Verstellen der Lenksäule auch dazu kommen, dass die Verzahnungen nur halb in Eingriff gelangen. Ein Nachteil dieser Lösung gemäß des Standes der Technik besteht entsprechend darin, dass die randseitigen Zähne bei häufiger und starker Beanspruchung beschädigt werden können. Weiters tritt bei diesen Ausgestaltungsformen die formschlüssige Verrastung zwischen Gegenarretierelement und Arretierelement unter Umständen erst nach einem gewissen Verschiebeweg ein. Dies passiert dann, wenn beim Schließen der Spanneinrichtung die Zähne nicht ineinandergreifen sondern aufeinander zu liegen kommen. Soll dieser Verschiebeweg klein gehalten werden, so muss die Verzahnung ebenfalls klein gehalten werden, was die Belastung des Zahnwerkstoffes erhöht.

Eine gattungsgemäße Feststelleinrichtung gemäß Oberbegriff des Anspruchs 1 ist aus der EP 0 887 245 A1 bekannt. Ein zusätzlicher Federkörper dient bei dieser Schrift als Rückstellelement.

Aufgabe der Erfindung ist es, eine mit möglichst wenig Teilen realisierbare gattungsgemäße Feststelleinrichtung bereitzustellen.

Um dies zu erreichen, wird erfindungsgemäß eine Feststelleinrichtung gemäß Patentanspruch 1 vorgeschlagen.

Es ist somit vorgesehen, dass das elastische Rückstellelement in Form einer elastischen Verformbarkeit des Arretierelementes oder des Gegenarretierelement ausgebildet ist.

Eine Idee der Erfindung ist es somit, die Feststelleinrichtung mit zumindest einem Eingriffselement auszurüsten, welches sich beim Schließen der Spanneinrichtung in zumindest eine Oberfläche des Arretierelementes und/oder des Gegenarretierelementes eingräbt und so mittels, vorzugsweise plastischer, Umformung einen formschlüssigen Eingriff sicherstellt. Dies führt zu den gewünschten hohen Widerstandskräften gegen eine Verschiebung der Lenksäule bzw. der Lenkspindel in der Schließstellung der Spanneinrichtung. Diese Ausbildung des Formschlusses mittels Umformung der Oberfläche hat aber auch den Vorteil, dass der formschlüssige Eingriff des Eingriffselementes jeweils an der gewünschten Stelle möglich ist, da bei jedem Schließen der Spanneinrichtung eine neue, vorzugsweise plastische, Umformung stattfindet, mit der sich das Eingriffselement jeweils an der eingestellten bzw. gewünschten Stelle in die Oberfläche eingräbt. Hierbei macht es auch nichts, wenn in unmittelbarer Umgebung dieser Stelle in der Oberfläche noch ein Loch bzw. eine Ausnehmung von einem vorherigen Eingriff des Eingriffselementes in die Oberfläche vorhanden ist. Durch die Umformung beim Schließen der Spanneinrichtung erzeugt das Eingriffselement eine neue Ausnehmung in der Oberfläche, wobei eine ursprünglich eventuell unmittelbar daneben angeordnete ältere Ausnehmung durch den Umformprozess auch wieder geschlossen werden kann. Hierdurch ist es möglich, die verstellbare Lenksäule oft und stufenlos zu verstellen, wobei nach der Verstellung wieder die gewünschte hohe Widerstandskraft gegen eine Verschiebung der Lenksäule in der Schließstellung der Spanneinrichtung erreicht ist. Die Oberfläche, in die das Eingriffselement eingreift, ist somit gezielt dazu vorgesehen bzw. ausgelegt, dass sie mehrfach vom Eingriffselement umgeformt wird. Vor dem ersten Eingriff des Eingriffselements in die Oberfläche kann diese eben bzw. glatt augebildet sein.

Wenn in den Ansprüchen von zumindest einem Eingriffselement die Rede ist, so bedeutet dies, dass es möglich ist, tatsächlich nur ein einziges Eingriffselement vorzusehen. In der Regel wird die Feststelleinrichtung aber mehrere entsprechende Eingriffselemente aufweisen, welche sich dann günstigerweise gleichzeitig beim Schließen der Spanneinrichtung in die Oberfläche eingraben. Bei der durchgängigen Verwendung der Formulierung des zumindest einen Eingriffselementes in den Patentansprüchen und der Beschreibung handelt es sich um eine rein sprachliche Vereinfachung. Das Gleiche gilt auch für die anderen Bauteile, welche als zumindest ein Bauteil angeführt sind.

Das Eingriffselement kann an verschiedenen Bauteilen der Feststelleinrichtung angeordnet sein. Zum Beispiel ist es möglich, dass das Eingriffselement an einem zusätzlichen Träger zwischen dem Arretierelement und dem Gegenarretierelement angeordnet ist und die Oberfläche, mit der das Eingriffselement in der Schließstellung der Spanneinrichtung in Eingriff steht, Teil des Arretierelementes oder des Gegenarretierelementes ist. Es können auch auf beiden Seiten dieses Trägers Eingriffselemente abstehen, welche dann sowohl in eine Oberfläche des Arretierelementes als auch in eine solche Oberfläche des Gegenarretierelementes eingreifen, wenn die Spanneinrichtung in die Schließstellung gebracht wird. Es kann aber auch sein, dass das Eingriffselement ein Teil des Arretierelementes oder ein Teil des Gegenarretierelementes ist und die Oberfläche, in die das Eingriffselement eingreift, jeweils dem anderen Bauteil zugeordnet ist. Bevorzugte Ausgestaltungsformen der Erfindung sehen in diesem Zusammenhang vor, dass das Eingriffselement am Arretierelement, vorzugsweise einstückig, ausgebildet ist. Mit anderen Worten kann das Eingriffselement somit fester bzw. fixer Bestandteil des Arretierelementes sein. Dasselbe gilt natürlich im Sinne der Umkehr auch für das Gegenarretierelement. Bevorzugt ist vorgesehen, dass das Arretierelement einen plattenartigen Grundkörper aufweist. Auch dies kann beim Gegenarretierelement so ausgeführt sein.

Das Eingriffselement steht günstigerweise über den plattenartigen Grundkörper über bzw. von diesem ab. In besonders bevorzugten Ausgestaltungsformen ist dabei vorgesehen, dass die Spanneinrichtung in ihrer Schließstellung das Arretierelement in einer Spannrichtung gegen das Gegenarretierelement spannt und das Eingriffselement in Richtung parallel zur Spannrichtung von einer dem Gegenarretierelement zugewandten Oberfläche des Arretierelementes absteht.

Im Sinne der oben genannten Umformung der Oberfläche beim Eingriff des Eingriffselementes ist es günstig, wenn das Eingriffselement härter ist als die Oberfläche, mit der es in der Schließstellung der Spanneinrichtung in Eingriff steht. Dies kann z. B. durch unterschiedliche Materialwahl oder entsprechende Härtung des Eingriffselementes erreicht werden.

In der Öffnungsstellung der Spanneinrichtung ist günstigerweise vorgesehen, dass das elastische Rückstellelement eine Aufhebung des formschlüssigen Eingriffs des Eingriffselementes in die Oberfläche, mit der es in der Schließstellung der Spanneinrichtung in Eingriff steht, bewirkt. Hierzu kann ein entsprechendes Abheben des Eingriffselementes von der genannten Oberfläche mittels des elastischen Rückstellelementes erreicht werden. Dabei ist ein vollständiges Abheben bzw. außer Kontakt bringen zu bevorzugen. Mit Vorteil ist zumindest ein Kontaktelement vorgesehen, das auch als Abstandshalter ausgebildet sein kann, das nach dem Abheben des zumindest einen Eingriffselementes von der Oberfläche des Arretierteils oder Gegenarretierteils in Kontakt mit einer Oberfläche des Arretierteils oder Gegenarretierteils steht. Hierdurch kann auch in der Öffnungsstellung der Spanneinrichtung noch ein Reibschluss zwischen dem Kontaktelement, das auch ein Abstandshalter sein kann, und der Oberfläche bereitgestellt werden, welcher einem ungewünschten Verstellen der verstellbaren Lenksäule in der Öffnungsstellung der Spanneinrichtung durch die Reibkraft entgegenwirkt und dadurch eine gezielte Verstellung durch den Lenker des Kraftfahrzeuges erleichtert. Durch diese Maßnahme kann auch ein Klappern in der Öffnungsstellung der Spanneinrichtung verhindert werden. Mit Vorzug ist das Kontaktelement mit dem Arretierteil oder mit dem Gegenarretierteil verbunden.

Es ist denkbar und möglich, dass das Kontaktelement mit dem elastischen Rückstellelement verbunden und/oder durch dieses selbst gebildet ist. Bei der Erfindung ist es vorgesehen, dass das elastische Rückstellelement in Form einer elastischen Verformbarkeit des Arretierelementes ausgebildet ist. Dabei bildet in anderen Worten das Arretierelement bzw. ein Bereich davon selbst das elastische Rückstellelement. Insbesondere bei Arretierelementen mit plattenartigen Grundkörpern können diese elastischen Eigenschaften zur Bereitstellung des elastischen Rückstellelementes durch entsprechende Materialwahl und Einstellung der Dicken erreicht werden. Natürlich kann auch das Gegenarretierelement zur Realisierung des elastischen Rückstellelements entsprechend ausgestaltet sein.

Unabhängig von der Art der Ausgestaltung des elastischen Rückstellelementes oder der elastischen Rückstellelemente ist günstigerweise vorgesehen, dass das elastische Rückstellelement beim Bewegen der Spanneinrichtungen in seine Öffnungsstellung automatisch den formschlüssigen Eingriff des Eingriffselementes in die Oberfläche, mit der es in der Schließstellung der Spanneinrichtung in Eingriff steht, aufhebt. Damit ist gewährleistet, dass bei einer Verstellbetätigung kein Materialkratzen oder dergleichen auftreten kann. Ein Aufheben des formschlüssigen Eingriffs in der Öffnungsstellung der Spanneinrichtung bzw. eine entsprechende Separierung der Bauteile kann alternativ aber auch über ein Zusatzelement oder durch den Einbau in ein anderes Element, welches die erforderliche Separierung sicherstellt, erfolgen.

Mit Vorteil ist die Auslegung des Eingriffselements oder der Eingriffselemente und des Arretierelements und des Gegenarretierelements derart dass die Spanneinrichtung bei ihrer Bewegung zwischen Schließstellung und Öffnungsstellung und umgekehrt nur einen möglichst geringen Hub erzeugen muss. In diesem Sinne ist es günstig, wenn das Eingriffselement 9 relativ flach ausgebildet ist. Es können hier schon einige zehntel Millimeter ausreichen. Günstigerweise beträgt die Erstreckung des Eingriffselementes in Spannrichtung zwischen 0,1 und 0,4 mm, vorzugsweise nur 0,2 mm. In anderen Worten steht das Eingriffselemente somit maximal zwischen 0,1 und 0,4 mm, vorzugsweise nur 0,2 mm, über. Grundsätzlich kann das Eingriffselement verschiedenste geometrische Formen haben. Es kann sich um gerade oder abgewinkelte Leisten oder dergleichen handeln. Besonders bevorzugte Ausgestaltungsformen sehen jedoch vor, dass das Eingriffselement als Noppen ausgebildet ist. Im Falle von mehreren Eingriffselementen ergibt sich ein entsprechendes Noppenfeld. Dabei soll bevorzugt eine möglichst regellose Anordnung gewählt werden, um zu verhindern, dass bei unterschiedlichen Einstellungen sich jeweils verschiedene Noppen an ein und demselben Punkt der Oberfläche des Gegenarretierteils bzw. des Arretierteils im Verriegelungsfall eingraben können.

Das Eingriffselement und insbesondere entsprechende Noppen können z. B. durch einen Prägevorgang ausgebildet werden. Die Art der Prägung und die Anzahl der Noppen bzw. Eingriffselemente kann so ausgelegt werden, dass sich die Spitzen der Noppen bzw. Eingriffselemente unter der Klemmkraft der Spanneinrichtung mindestens um ihre halbe, vorzugsweise um die gesamte, Höhe in die genannte Oberfläche eingraben bzw. einformen, wenn die Spanneinrichtung in die Schließstellung gebracht wird. Die Eingriffselemente bzw. Noppen sind günstigerweise verstreut angeordnet. Sie sind günstigerweise untereinander distanziert.

Bevorzugte Ausgestaltungsformen der Erfindung sehen vor, dass zwischen dem Arretierelement und dem Gegenarretierelement und distanziert vom Eingriffselement zumindest ein Abstandshalter angeordnet ist. Auch dieser Abstandshalter trägt dazu bei, dass das Eingriffselement vom elastischen Rückstellelement in der Öffnungsstellung der Spanneinrichtung automatisch von der genannten Oberfläche abgehoben wird. Der Abstandshalter kann am Arretierelement aber auch am Gegenarretierelement oder an beiden genannten Elementen angeordnet bzw. fixiert sein oder auch durch andere Mittel zwischen Arretierelement und Gegenarretierelement gehalten sein.

Bevorzugte Ausgestaltungsformen der Erfindung sehen in diesem Zusammenhang vor, dass die Spanneinrichtung einen, vorzugsweise das Arretierelement und/oder das Gegenarretierelement durchdringenden, Spannbolzen aufweist, wobei der Abstandshalter weiter vom Spannbolzen entfernt ist als das Eingriffselement. Dies muss nicht zwingend so sein, ist aber im Sinne der räumlichen Kräfteverteilung günstig. Besonders bevorzugt ist der Einsatz von mehreren als Noppen ausgebildeten Eingriffselementen, die im näheren Umfeld des Spannbolzens verteilt angeordnet sind. Das nähere Umfeld ist im Sinne der Erfindung der Bereich innerhalb eines Halbmesser (=Radius) um die Spannachse mit einer Größe von etwa 1/3 bis maximal 1/2 des Abstandes von einem der Kontaktelemente bzw. Abstandshalter bis zur Spannachse. Die Spannachse wird im Zweifel durch die Mittellängsachse des Spannbolzens gebildet.

Um im Bereich des oder der Eingriffselemente mittels der Spanneinrichtung möglichst hohe Kräfte aufbringen zu können, sehen bevorzugte Ausgestaltungsformen der Erfindung vor, dass die Spanneinrichtung in ihrer Schließstellung das Arretierelement in einer Spannrichtung gegen das Gegenarretierelement spannt und einen Pressstempel aufweist, wobei der Pressstempel das Arretierelement in der Schließstellung in Spannrichtung, vorzugsweise nur, im Bereich des Eingriffselements beaufschlagt. Mit anderen Worten wirkt der Pressstempel bzw. das Druckstück möglichst unmittelbar dort auf die Rückseite des Arretierelements oder gegebenenfalls Gegenarretierelements oder des sonstigen Trägers ein, wo sich auf der gegenüberliegenden Frontseite das oder die Eingriffselemente befinden. Der Pressstempel bzw. das Druckstück können z. B. direkt auf der dem Eingriffselement entgegengesetzten Seite auf das Arretierelement und/oder Gegenarretierelement einwirken.

Neben der Feststelleinrichtung an sich betrifft die Erfindung auch eine verstellbare Lenksäule für ein Kraftfahrzeug, wobei die verstellbare Lenksäule eine Lenkspindellagereinheit zur drehbaren Lagerung einer Lenkspindel und eine, zur Befestigung der verstellbaren Lenksäule an einer Karosserie des Kraftfahrzeuges vorgesehene Trageinheit aufweist, wobei die verstellbare Lenksäule eine erfindungsgemäße Feststelleinrichtung zum Feststellen der Lenkspindellagereinheit an der Trageinheit aufweist. In besonders bevorzugten Ausgestaltungsformen solcher verstellbaren Lenkäulen kann vorgesehen sein, dass das Gegenarretierelement ein Teil, vorzugsweise eine zur Lenkspindellagereinheit benachbart angeordnete Seitenwange, der Trageinheit ist.

Bei der Lenkspindellagereinheit handelt es sich somit um den Bauteil der verstellbaren Lenksäule, in dem die Lenkspindel drehbar gelagert ist. Die Trageinheit ist der Teil der verstellbaren Lenksäule, welcher der Befestigung der verstellbaren Lenksäule an der Karosserie des Kraftfahrzeuges dient. Zur Verstellung der Position der Lenkspindel und damit des daran zu befestigenden Lenkrades wird die Lenkspindellagereinheit relativ zur karosseriefesten bzw. an der Karosserie befestigbaren Trageinheit verstellt. Erfindungsgemäße verstellbare Lenksäulen können dabei eine Verstellung in Längsrichtung der Lenkspindel oder in einer dazu orthogonalen Höhenrichtung oder in beiden genannten Richtungen vorsehen.

Weitere Merkmale und Einzelheiten bevorzugter Ausgestaltungsformen der Erfindung ergeben sich aus der nachfolgenden Figurenbeschreibung. Dabei zeigen:
Fig. 1 und 2 Darstellungen zu einer erfindungsgemäß ausgebildeten verstellbaren Lenksäule;
Fig. 3 und 4 eine erste erfindungsgemäße Ausführungsvariante in einer Detaildarstellung in einer Schnittebene normal zur Längsrichtung der Lenkspindel;
Fig. 5 einen Teil der Spanneinrichtung mit daran angeordnetem Pressstempel in einer ersten Ausgestaltungsform;
Fig. 6 das der Ausführungsform gemäß Fig. 5 zugeordnete Arretierelement;
Fig. 7 eine alternative Ausgestaltungsform eines entsprechenden Teils der Spanneinrichtung;
Fig. 8 eine Ausgestaltungsform des Arretierelementes, die mit dem Spannelement entsprechend der Fig. 7 kombinierbar ist;
Fig. 9 und 10 eine zweite erfindungsgemäße Ausführungsform in einer zu Fig. 3 und 4 analogen Darstellungsart und
Fig. 11 ein den Fig. 9 und 10 zugeordnetes Arretierelement.

Gleichartige oder gleichwirkende Elemente werden in den Figuren mit denselben Bezugszeichen bezeichnet.

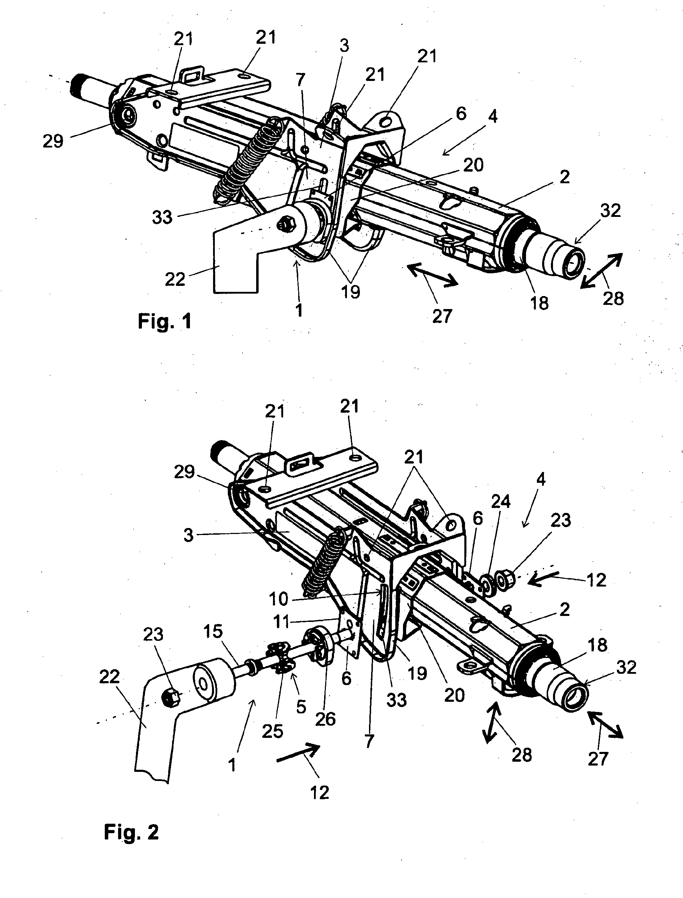

Die Fig. 1 und 2 zeigen in einer perspektivischen Darstellung eine verstellbare Lenksäule 4 mit einer Feststelleinrichtung 1, welche in Form eines ersten Ausführungsbeispiels der Erfindung ausgeführt ist. Zuerst wird nun auf die an sich bekannten Merkmale dieser verstellbaren Lenksäule 4 eingegangen. Sie umfasst eine Lenkspindellagereinheit 2, in der die Lenkspindel 18 um ihre Längsachse drehbar gelagert ist. Am Lenkradanschlussstück 32 der Lenkspindel 18 kann das hier nicht dargestellte Lenkrad befestigt werden. Um die gezeigte Lenksäule als verstellbare Lenksäule 4 auszuführen, ist die Lenkspindellagereinheit 2 an der Trageinheit 3 verstellbar gelagert. Die Trageinheit 3 ist das Bauteil der verstellbaren Lenksäule 4, welches an der Karosserie des Fahrzeuges fixiert wird öder ist. Im gezeigten Ausführungsbeispiel sind hierfür Befestigungslaschen 21 vorgesehen. Die Trageinheit 3 kann natürlich auch in anderer Weise fix oder lösbar an der Karosserie des Fahrzeuges befestigt sein. Im gezeigten Ausführungsbeispiel befindet sich zwischen der Trageinheit 3 und der Lenkspindellagereinheit 2 das an sich bekannte Zwischenteil 20, welches über das Schwenkgelenk 29 an der Trageinheit 3 schwenkbar befestigt ist. Bei geöffneter Feststelleinrichtung 1 kann die Lenkspindellagereinheit 2 im gezeigten Ausführungsbeispiel sowohl in den Längsrichtungen 27 als auch in den Höhenrichtungen 28 relativ zur Trageinheit 3 verstellt werden. Im gezeigten Ausführungsbeispiel erfolgt die Längsverstellung durch entsprechende Verschiebung der Lenkspindellagereinheit in einer der Längsrichtungen 27 im Zwischenteil 20 und die Höhenverstellung in einer der Höhenrichtungen 28 durch Verschwenken von Lenkspindellagereinheit 2 samt Zwischenteil 20 um das Schwenkgelenk 29 relativ zur Trageinheit 3. Im geschlossenen Zustand der Feststelleinrichtung 1 sind die Haltekräfte so groß, dass zumindest im Normalbetrieb eine Verstellung weder in Längsrichtung 27 noch in Höhenrichtung 28 möglich ist. In der geschlossenen Stellung drückt die Feststelleinrichtung 1 die beiden Seitenwangen 19 des Tragteils 3 so fest gegen das Zwischenteil 20 und die Lenkspindellagereinheit 2, dass die gewünschte Arretierung erreicht wird. Für den Crashfall kann auch bei geschlossener Feststelleinrichtung 1 ein Verschieben, insbesondere in Längsrichtung 27 und vorzugsweise unter Zwischenschaltung von speziellen Energieaufzehrungselementen möglich sein. Dies kann, wie beim Stand der Technik an sich bekannt, ausgeführt sein und muss hier nicht weiter erläutert werden. Die Seitenwangen 19 sind jedenfalls so elastisch rückfedernd ausgebildet, dass sie bei geöffneter Feststelleinrichtung 1 die genannten Verstellmöglichkeiten der verstellbaren Lenksäule 4 zulassen.

Die Feststelleinrichtung 1 des gezeigten Ausführungsbeispiels ist mehrteilig ausgeführt. Sie umfasst die hier ebenfalls mehrteilig ausgeführte Spanneinrichtung 5 sowie im gezeigten Ausführungsbeispiel auch die beiden Seitenwangen 19 der Trageinheit 3. Die hier realisierte Spanneinrichtung 5 umfasst ebenfalls mehrere Bauteile. Dies sind der Handbedienhebel 22, der Spannbolzen 15, die erste und zweite Nockenanordnung 25 und 26 sowie die Muttern 23 und die Drucklager 24. Darüber hinaus umfasst die Spanneinrichtung 5 erfindungsgemäß auch paarweise zusammenwirkende Arretierelemente 6 und Gegenarretierelemente 7, welche im gezeigten Ausführungsbeispiel auf beiden Seiten, also im Bereich beider Seitenwangen 19 ausgebildet bzw. angeordnet sind. Das Zusammenwirken der erfindungsgemäßen Arretierelemente 6 und Gegenarretierelemente 7 wird weiter unten geschildert. Zunächst wird festgehalten, dass die Spanneinrichtung 5 durch Verschwenken des Handbedienhebels 22 um die Längsachse des Spannbolzens 15 von seiner Öffnungsstellung in seine Schließstellung und umgekehrt gebracht werden kann. Hierzu ist, wie an sich bekannt, eine der beiden Nockenanordnungen 25 oder 26 drehfest mit dem Handbedienhebel 22 und die andere der beiden Nockenanordnungen 25 oder 26 drehfest mit der Trageinheit 3 verbunden. Durch Verdrehen der beiden Nockenanordnungen 25 und 26 gegeneinander um die Längsachse des Spannbolzens 15 wird ein Hub erzeugt, welcher in Schließrichtung zu einem Verspannen der Seitenwangen 19 führt. Die Spannrichtungen 12, also die Richtungen, in denen beim Schließen der Spanneinrichtung 5 Druck aufgebaut wird, sind in Fig. 2 eingezeichnet und verlaufen parallel zur Längsachse des Spannbolzens 15.

Der Spannbolzen 15 durchdringt im gezeigten Ausführungsbeispiel Langlöcher 33 in den Seitenwangen 19, wodurch die Höhenverstellung in den Höhenrichtungen 28 möglich wird.

Bevor nun auf das erfindungsgemäße Zusammenwirken von Arretierelement 6 und Gegenarretierelement 7 eingegangen wird, sei noch darauf hingewiesen, dass sich die Feststelleinrichtung 1 dann in ihrer Öffnungsstellung befindet, wenn sich die Spanneinrichtung 5 in ihrer Öffnungsstellung befindet. Das Gleiche gilt für die Schließstellung, auch hier befindet sich die Feststelleinrichtung 1 dann in ihrer Schließstellung, wenn sich auch die Spanneinrichtung 5 in ihrer Schließstellung befindet. Weiters sei darauf hingewiesen, dass es sich bei dem gezeigten Ausführungsbeispiel nur um eine von vielen möglichen Varianten einer verstellbaren Lenksäule 4 handelt. Alle beim Stand der Technik bekannten Ausgestaltungsmerkmale können durch andere, beim Stand der Technik bekannte Ausgestaltungsmerkmale ersetzt werden, solange sich hieraus eine funktionsfähige verstellbare Lenksäule ergibt. Zum Beispiel kann das Zwischenteil 20 weggelassen sein oder geeignet ersetzt werden. Es kann sich um eine verstellbare Lenksäule 4 handeln, welche nur in Längsrichtungen 27 oder nur in Höhenrichtungen 28 verstellbar ist. Lenkspindellagereinheit 2 und Trageinheit 3 können unterschiedlich ausgestaltet sein. Das Gleiche gilt für die an sich bekannten Merkmale von Feststelleinrichtung 1 und Spanneinrichtung 5. Zum Beispiel kann der Handbedienhebel 22 durch einen Elektromotor oder dergleichen ersetzt werden. Das Gleiche gilt für Ausgestaltung und drehfeste Fixierung der Nockenanordnungen 25 und 26, nur um einige Beispiele von abweichenden Ausgestaltungsvarianten zu nennen.

Beabsichtigt ist es, die Feststelleinrichtung 1 bzw. die Spanneinrichtung 5 so auszugestalten, dass ein unbeabsichtigtes Verstellen von Lenkspindellagereinheit 2 relativ zur Trageinheit 3 in der Schließstellung der Spanneinrichtung 5 wirksam verhindert ist, andererseits aber auch innerhalb der systembedingten Verstellgrenzen jede Position eingestellt werden kann, also eine stufenlose Verstellung möglich ist.

Im gezeigten Ausführungsbeispiel sind mehrere Eingriffselemente 9 vorgesehen, welche bei dieser Variante der Erfindung Teil des Arretierelementes 6 sind. Das Arretierelement 6 weist einen plattenartigen Grundkörper 11 auf, von dem die Eingriffselemente 9 in Richtung hin zum Gegenarretierelement 7 und parallel zur Spannrichtung 12 abstehen. Die Eingriffselemente 9 sind im gezeigten Ausführungsbeispiel in Form von geprägten Noppen ausgeführt. Das Gegenarretierelement 7 ist im gezeigten Ausführungsbeispiel jeweils ein Teil der Seitenwange 19. Die Oberfläche 10 des Gegenarretierelementes 7, in die die Eingriffselemente 6 eingreifen bzw. sich eingraben, sind die Oberflächenbereiche neben den Langlöchern 33. Dies ist natürlich nur ein Ausführungsbeispiel. Auch eine umgekehrte Anordnung ist denkbar. Die Eingriffselemente 9 könnten auch am Gegenarretierelement 7, also hier an den Seitenwangen 19, angeordnet sein. Dann würde sich die Oberfläche 10 zum Beispiel am Arretierelement 6 befinden. Abweichend hiervon ist es sogar denkbar, dass die Eingriffselemente 9 an einem separaten Träger zwischen Arretierelement 6 und Gegenarretierelement 7 angeordnet sind und sowohl Arretierelement 6 als auch Gegenarretierelement 7 entsprechende Oberflächen 10 aufweisen, in die sich die Eingriffselemente 9 beim Schließen der Spanneinrichtung eingraben. Ein wesentlicher Grundgedanke ist es, dass sich die Eingriffselemente 9 beim Schließen der Spanneinrichtung 5 in die Oberfläche 10 eingraben, indem sie diese umformen. Dabei wird beim Eindrücken der Eingriffselemente 9 in die entsprechenden Stellen der Oberfläche 10 eine Vertiefung geschaffen, indem aus diesem Bereich der dabei entstehenden Vertiefung Material der Oberfläche 10 in Seitenbereiche gedrückt wird. Diese Art der Umformung kann an einer beliebigen Stelle der Oberfläche 10 erfolgen. Trifft diese Umformung eine bereits früher dort vorgenommene Umformung, so wird die alte Umformung überprägt. Dies hat zwei Vorteile. Zum einen wird durch das Eingraben der Eingriffselemente 9 in die Oberfläche 10 und die dabei ausgeführte Umformung ein Formschluss und damit ein sehr stabiles Befestigen bzw. Arretieren erreicht. Zum anderen kann aber, im Sinne einer stufenlosen Verstellung, eine beliebige Stellung eingestellt werden. Selbst wenn dort von einer älteren Umformung noch eine Oberflächenstrukturierung der Oberfläche 10 vorhanden ist, so wird diese durch das erneute Eingraben der Eingriffselemente 9 und die damit verbundene Umformung überprägt, so dass an der nun gewünschten Stelle der Formschluss realisiert wird. In der Öffnungsstellung der Spanneinrichtung 5 hingegen soll der Formschluss wieder aufgehoben werden. Hierzu ist ein elastisches Rückstellelement 8 vorgesehen, welches in der Öffnungsstellung der Spanneinrichtung 5 das oder die Eingriffselemente 9 von der Oberfläche 10 abhebt. Es ist dabei vorgesehen, dass das elastische Rückstellelement 8 in Form einer elastischen Verformbarkeit des Arretierelementes 6 ausgebildet ist. Es können von den Eingriffselementen 9 distanzierte Abstandshalter 14 vorgesehen sein. In den, in den Fig. 1 bis 8 dargestellten Varianten der Erfindung sind diese Abstandshalter 14 Teil des Arretierelementes 6, dort allerdings randlich angeordnet.

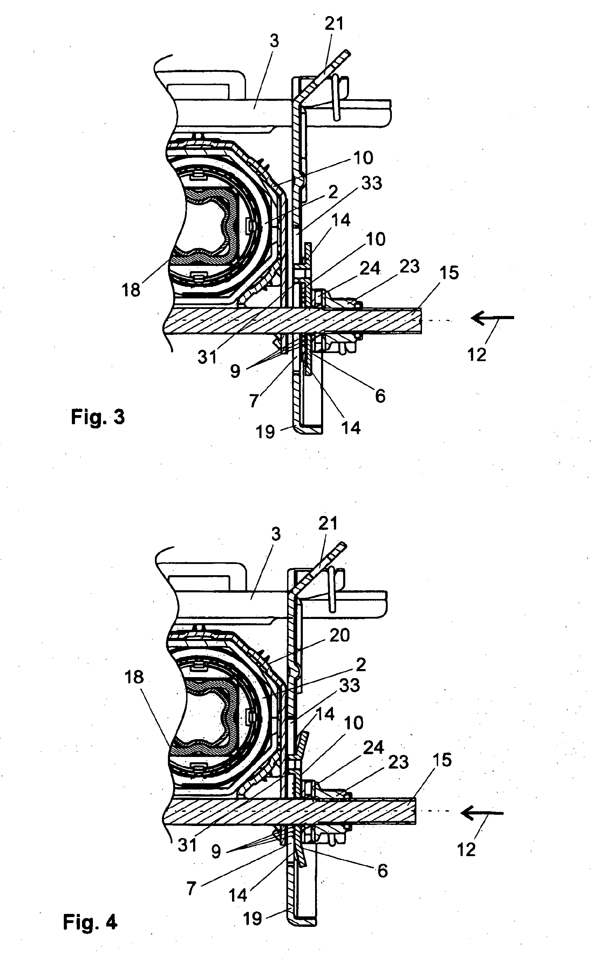

Fig. 3 zeigt nun in einem Schnitt normal zur Längsachse der Lenkspindel 18 die Öffnungsstellung der Spanneinrichtung 5. In dieser sind die hier am Arretierelement 6 fixierten Eingriffselemente 9 nicht in die Oberfläche 10, des hier als Gegenarretierelement 7 verwendeten Bereichs der Seitenwange 19, eingegraben. Die Eingriffselemente 9 sind dabei in der Öffnungsstellung der Spanneinrichtung 5 von der Oberfläche 10 vollständig abgehoben sind, so dass auch kein Reibschluss mehr vorhanden ist.

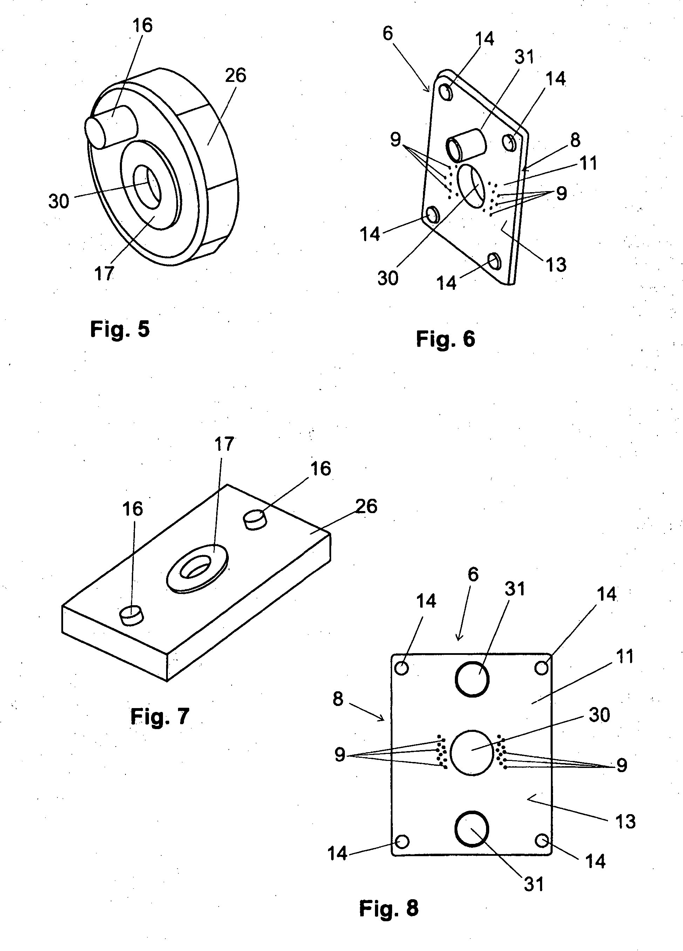

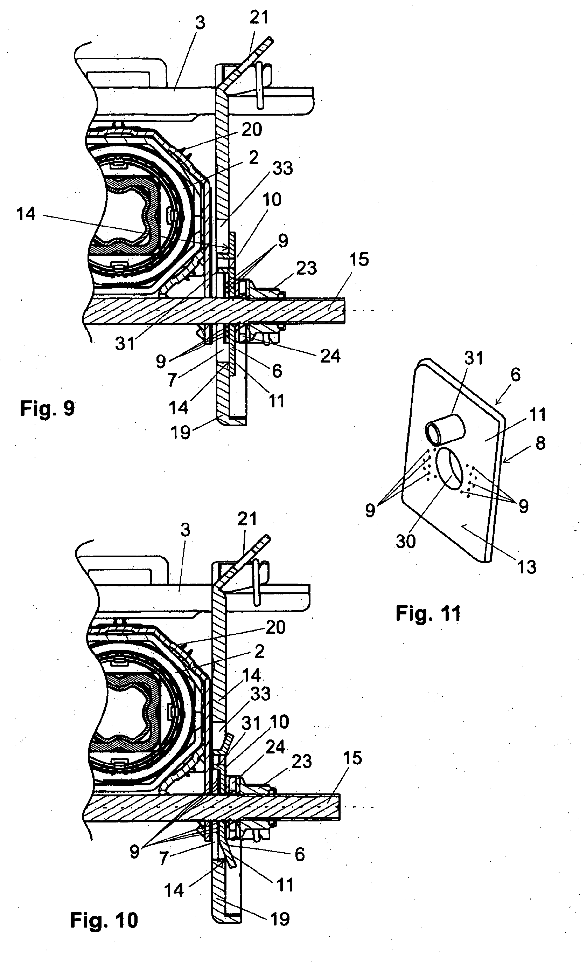

Fig. 4 zeigt die Spanneinrichtung in ihrer Schließstellung. Die Eingriffselemente 9 haben sich in dieser Stellung unter Umformung der Oberfläche 10 in diese eingegraben, so dass der gewünschte Formschluss erreicht ist. Der Vollständigkeit halber wird darauf hingewiesen, dass die Eingriffselemente 9 eigentlich nicht in der in den Fig. 3 und 4 gezeigten Schnittebene sondern davor und/oder dahinter liegen. In der Schnittebene würden sie ins Langloch 33 und damit ins Leere greifen. In Fig. 4 sind sie der Darstellung wegen eingezeichnet, auch wenn sie in dieser Stellung ja in die Oberfläche 10 eingegraben und dadurch verbogen sind. Gleiches gilt auch für die weiter hinten gezeigten Fig. 9 und 10. Beim Öffnen der Spanneinrichtung 5 federt im gezeigten Ausführungsbeispiel der plattenartige Grundkörper 11 das Arretierelement 6 wieder in seine Stellung gem. Fig. 3 zurück. Fig. 6 zeigt das in diesem Ausführungsbeispiel verwendete Arretierelement 6. Der plattenartige Grundkörper 11 weist eine Aufnahmeausnehmung 30 und eine Verdrehsicherung 31 auf. Durch die Aufnahmeausnehmung 30 ist der Spannbolzen 15 hindurchgeführt. Die hier in Form von Noppen ausgebildeten Eingriffselemente 9 stehen parallel zur Spannrichtung 12 vom plattenartigen Grundkörper 11 ab und sind in unmittelbarer Umgebung der Aufnahmeausnehmung 30 und damit des Spannbolzens 15 angeordnet. Die in diesem Ausführungsbeispiel am plattenartigen Grundkörper 11 ebenfalls angeordneten Abstandshalter 14 sind demgegenüber von der Aufnahmeausnehmung 30 und damit vom Spannbolzen 15 weiter entfernt. Generell ist es günstig, wenn bei Ausführungsformen wie den gezeigten, die Eingriffselemente 9 möglichst nah am Spannbolzen 15 angeordnet sind, da hier konstruktiv einfach die größten Kräfte übertragen werden können. Allerdings sollte die Anordnung der Eingriffselemente 9 gesamtsystemtechnisch gesehen so sein, dass diese seitlich mit ausreichendem Abstand neben dem Langloch 33 in die Oberfläche 10 eingreifen, da ansonsten eine Gefahr der Beschädigung der Führungsbahn besteht. Anstelle der gezeigten Noppen können als Eingriffselemente 9 natürlich auch geometrisch anders ausgeformte Vorsprünge vorgesehen sein. Dies können z. B. Leisten, Sägezähne oder dergleichen sein. Die Oberfläche 13, von der die Eingriffselemente 9 abstehen, sollte im zusammengebauten Zustand jedenfalls günstigerweise der Oberfläche 10, in die die Eingriffselemente 9 eindringen, gegenüberliegend angeordnet sein. Die eine oder mehrere Verdrehsicherungen 31 greifen in das Langloch 33 ein, so dass bei Verstellung der Lenkspindellagereinheit in der Verstellrichtung, die durch das Langloch 33 vorgegeben ist, eine verdrehgesicherte Führung des Arretierelements 6 gegeben ist. Dabei kann ein minimales Verdrehspiel bewusst vorgesehen sein. In den gezeigten Ausführungsbeispielen sind die Verdrehsicherungen 31 gleichzeitig durch eine Kragenziehoperation als Aufnahmeausnehmung zur Aufnahme eines Führungszapfens 16 der, dem Arretierelement 6 zugewandten, zweiten Nockenanordnung 26 ausgebildet. Auf diese einfache Weise ist sowohl für das Arretierelement als auch für die zweite Nockenanordnung 26 eine Verdrehsicherung dargestellt. Es ist jedoch denkbar und möglich, die technische Lösung auch ohne Verdrehsicherungen 31 auszuführen. Das Langloch 33 kann linear oder bogenförmig ausgebildet sein. Unabhängig davon, ob das Langloch 33 linear oder bogenförmig ausgebildet ist, kann ein identisch bzw. gleich ausgebildetes Arretierelement 6 eingesetzt werden.

Es ist jedoch zu bevorzugen, eine Verdrehsicherung vorzusehen. Alternativ zu den dargestellten Lösungen könnte der Zapfen 16 auch am Arretierelement 6 und eine entsprechende Verdrehsicherung 31 am entsprechenden Gegenstück angeordnet sein. Darüber hinaus sind noch viele andere Möglichkeiten der Verdrehsicherung denkbar. Auch andere Verbindungs- bzw. Verdrehsicherungsmittel sind denkbar und möglich, beispielsweise ein ungebogener Blechlappen, der in eine Aussparung der Nockenanordnung 26 eingreift oder diese umschließt. Der die Verdrehsicherung bewirkende Führungszapfen 16 kann auch so lang ausgebildet sein, dass er im Sinn einer Verdrehsicherung in das Langloch 33 hineinragt. Falls für das Drucklager 24 ebenfalls eine Verdrehsicherung dargestellt werden soll, kann dies in analoger Weise wie für die Nockenanordnung 26 ausgebildet sein. Das Drucklager 24 kann auch einfach als Beilagscheibe ausgebildet sein. In den Fig. 3 und 4 sowie 9 und 10 ist veranschaulicht, dass die Drucklager 24 nicht unbedingt mit Führungszapfen 16 ausgestattet sein müssen.

Fig. 5 zeigt die Rückseite der zweiten Nockenanordnung 26, an der der Führungszapfen 16 der Verdrehsicherung fixiert ist. Die Führungsgeometrie ist gegenüber der Aufnahmeausnehmung 30 für den Spannbolzen 15 so angeordnet, dass das Arretierelement 6 sich in geradlinigen sowie kurvenförmigen Führungsbahnen bewegen kann, ohne dass hierzu eine Neugestaltung notwendig ist. Dies ermöglicht es, gleichartige Arretierelemente 6 und Nockenanordnungen 25 und 26 in verschiedenen verstellbaren Lenksäulen 4 zu verwenden. Die Aufnahmeausnehmung 30 für den Spannbolzen 15 ist bei der zweiten Nockenanordnung 26 von einem erhabenen Bereich umgeben, welcher den Pressstempel 17 bzw. das Druckstück bildet. Dieser drückt auf die Rückseite des Arretierelementes 6 in dem Bereich, in dem auf der anderen Seite die Eingriffselemente 9 angeordnet sind, so dass diese sich beim Schließen der Spanneinrichtung 5, wie bereits geschildert, in die Oberfläche 10 des Gegenarretierelementes 7 eingraben. Das Arretierelement 6 bzw. sein plattenartiger Grundkörper 11 werden dabei, wie geschildert, elastisch verformt. Auf der gegenüberliegenden Seite bzw. im Bereich der gegenüberliegenden Seitenwange 19 ist ein Pressstempel 7 entsprechend an dem Drucklager 24 angeordnet. Fig. 7 und 8 zeigen abweichende Ausführungsformen von Arretierelement 6 und zweiter Nockenanordnung 26 bzw. Drucklager 24. Der Unterschied besteht allerdings nur darin, dass in der Ausführungsform gemäß Fig. 7 und 8 zwei Führungszapfen 16 anstatt eines Führungszapfens 16 angeordnet sind.

Wie eingangs bereits erläutert, ist günstigerweise vorgesehen, dass die Eingriffselemente 9 und/oder auch das gesamte Arretierelement 6 aus einem härteren Material als die Oberfläche 10 ausgebildet ist, in die sich die Eingriffselemente 6 eingraben.

In den Fig. 9 bis 11 ist eine alternative Ausgestaltungsform der Erfindung gezeigt. Hier sind die Abstandshalter 14, nicht wie beim ersten Ausführungsbeispiel, am Arretierelement 6 sondern als Teil des Gegenarretierelementes 7 ausgebildet. Die Abstandshalter 14 sind in diesem Ausführungsbeispiel gemäß der Fig. 9 bis 11 von einem randlichen Bereich des Gegenarretierelementes 7, der den Bereich (= die Oberfläche 10), in den die Eingriffselemente 9 bei geschlossener Feststelleinrichtung eingreifen, umschließt, gebildet. Zwischen diesen Abstandshaltern 14 bzw. dem randlichen Bereichen befindet sich ein vertiefter Bereich, in dem sich die Oberfläche 10 befindet. Fig. 9 zeigt in einer analogen Darstellung zu Fig. 3 die Spanneinrichtung 5 in der Öffnungsstellung. In dieser sind die Eingriffselemente 9 des Arretierelementes 6 nicht in die Oberfläche 10 des Gegenarretierelementes 7 eingegraben. Fig. 10 zeigt die Schließstellung der Spanneinrichtung 5. In der Schließstellung wurde das Arretierelement 6 so weit verformt, dass die Eingriffselemente 9 sich in die Oberfläche 10 eingegraben haben und somit der gewünschte Formschluss erreicht wurde. Beim Öffnen der Spanneinrichtung 5 stellt sich dann aufgrund der elastischen Eigenschaften und der dadurch bedingten Rückfederung des plattenförmigen Grundkörpers 11 wieder der Zustand gemäß Fig. 9 ein. Auch in diesem Ausführungsbeispiel ist dabei aus den genannten Gründen günstigerweise vorgesehen, dass die Abstandshalter 14 in der Öffnungsstellung der Spanneinrichtung 5 noch reibschlüssig an dem Arretierteil 6 anliegen. Natürlich kann auch hier ein vollständiges Abheben im geöffneten Zustand der Spanneinrichtung 5 realisiert werden. Fig. 11 zeigt eine mögliche Variante für das Arretierelement 6 entsprechend diesem Ausführungsbeispiel. Es unterscheidet sich von Fig. 6 nur durch das Weglassen der Abstandshalter 14.

Abschließend sei noch darauf hingewiesen, dass die Erfindung auch mit anderen Spanneinrichtungen als den gezeigten realisiert werden kann. Es kann z. B. an Stelle der Nockenanordnungen 25 und 26 eine axiale, in Richtung parallel zum Spannbolzen 15 bewegbare Druckplatte vorgesehen sein. Beispielsweise können zwischen den Nockenkonturen auch Wälzkörper angeordnet sein. Auch andere Lösungen sind denkbar und möglich.

Entsprechend den Ausführungsbeispielen wird, durch die formschlüssige Fixierung der Lenkspindellagereinheit 2 gegenüber der Trageinheit 3 in Höhenrichtung 28 eine große Fixierkraft bereitgestellt. Insbesondere in einem Crashfall können auf diese Weise auf die Lenkspindellagereinheit im Crashfall einwirkende schräg wirkende Kräfte abgestützt werden und das Verdrehen der Lenksäule verhindert werden. Falls eine besonders hohe Widerstandskraft gegen eine Verstellung der Lenkspindellagereinheit 2 gegenüber der Trageinheit 3 in Längsrichtung 27 gefordert ist, kann die Erfindung auch hier eingesetzt werden.

Soweit technisch möglich, können unterschiedliche Merkmale der oben beschriebenen Ausführungsbeispiele auch untereinander kombiniert und ausgetauscht werden.

**Legende zu den Hinweisziffern:**

| | | | |
|---|---|---|---|
| 1 | Feststelleinrichtung | 28 | Höhenrichtung |
| 2 | Lenkspindellagereinheit | 29 | Schwenkgelenk |
| 3 | Trageinheit | 30 | Aufnahmeausnehmung |
| 4 | verstellbare Lenksäule | 31 | Verdrehsicherung |
| 5 | Spanneinrichtung | 32 | Lenkradanschluss |
| 6 | Arretierelement | 33 | Langloch |
| 7 | Gegenarretierelement | | |
| 8 | elastisches Rückstellelement | | |
| 9 | Eingriffselement | | |
| 10 | Oberfläche | | |
| 11 | plattenartiger Grundkörper | | |
| 12 | Spannrichtung | | |
| 13 | Oberfläche | | |
| 14 | Abstandshalter | | |
| 15 | Spannbolzen | | |
| 16 | Führungszapfen | | |
| 17 | Pressstempel | | |
| 18 | Lenkspindel | | |
| 19 | Seitenwange | | |
| 20 | Zwischenteil | | |
| 21 | Befestigungslasche | | |
| 22 | Handbedienhebel | | |
| 23 | Mutter | | |
| 24 | Drucklager | | |
| 25 | erste Nockenanordnung | | |
| 26 | zweite Nockenanordnung | | |
| 27 | Längsrichtung | | |

## Patentansprüche

1. Feststelleinrichtung (1) zum Feststellen einer Lenkspindellagereinheit (2) an einer Trageinheit (3) einer verstellbaren Lenksäule (4) für ein Kraftfahrzeug, wobei die Feststelleinrichtung (1) zumindest eine Spanneinrichtung (5) und zumindest ein, mittels der Spanneinrichtung (5) beaufschlagbares Arretierelement (6) sowie zumindest ein Gegenarretierelement (7) aufweist, wobei das Arretierelement (6) und das Gegenarretierelement (7) in einer Schließstellung der Spanneinrichtung (5) in einer Eingriffsstellung angeordnet sind, und die Feststelleinrichtung (1) zumindest ein elastisches Rückstellelement (8) zur Rückstellung des Arretierelements (6) in einer Öffnungsstellung der Spanneinrichtung (5) aufweist, wobei die Feststelleinrichtung (1) zumindest ein Eingriffselement (9) aufweist, welches in der Schließstellung der Spanneinrichtung (5) mittels plastischer Umformung zumindest einer Oberfläche (10) des Arretierelements (6) und/oder des Gegenarretierelements (7) mit dieser Oberfläche (10) formschlüssig in Eingriff steht, **dadurch gekennzeichnet, dass** das elastische Rückstellelement (8) in Form einer elastischen Verformbarkeit des Arretierelementes (6) oder des Gegenarretierelement (7) ausgebildet ist.

2. Feststelleinrichtung (1) nach Anspruch 1, **dadurch gekennzeichnet, dass** das Eingriffselement (9) härter ist als die Oberfläche (10), mit der es in der Schließstellung der Spanneinrichtung (5) in Eingriff steht.

3. Feststelleinrichtung (1) nach Anspruch 1 oder 2, **dadurch gekennzeichnet, dass** das Eingriffselement (9) am Arretierelement (6), vorzugsweise einstückig, ausgebildet ist und/oder dass das Arretierelement (6) einen plattenartigen Grundkörper (11) aufweist.

4. Feststelleinrichtung (1) nach einem der Ansprüche 1 bis 3, **dadurch gekennzeichnet, dass** die Spanneinrichtung (5) in ihrer Schließstellung das Arretierelement (6) in einer Spannrichtung (12) gegen das Gegenarretierelement (7) spannt und das Eingriffselement (9) in Richtung parallel zur Spannrichtung (12) von einer dem Gegenarretierelement (7) zugewandten Oberfläche (13) des Arretierelementes (6) absteht.

5. Feststelleinrichtung (1) nach einem der Ansprüche 1 bis 4, **dadurch gekennzeichnet, dass** das Eingriffselement (9) als Noppen ausgebildet ist.

6. Feststelleinrichtung (1) nach einem der Ansprüche 1 bis 5, **dadurch gekennzeichnet, dass** zwischen dem Arretierelement (6) und dem Gegenarretierelement (7) und distanziert vom Eingriffselement (9) zumindest ein Abstandshalter (14) angeordnet ist.

7. Feststelleinrichtung (1) nach Anspruch 6, **dadurch gekennzeichnet, dass** die Spanneinrichtung (5) einen, vorzugsweise das Arretierelement (6) und/oder das Gegenarretierelement (7) durchdringenden, Spannbolzen (15) aufweist, wobei der Abstandshalter (14) weiter vom Spannbolzen (15) entfernt ist als das Eingriffselement (9).

8. Feststelleinrichtung (1) nach einem der Ansprüche 1 bis 7, **dadurch gekennzeichnet, dass** die Spanneinrichtung (12) in ihrer Schließstellung das Arretierelement (6) in einer Spannrichtung (12) gegen das Gegenarretierelement (7) spannt und einen Pressstempel (17) aufweist, wobei der Pressstempel (17) das Arretierelement (6) in der Schließstellung in Spannrichtung (12), vorzugsweise nur, im Bereich des Eingriffselements (9) beaufschlagt.

9. Verstellbare Lenksäule (4) für ein Kraftfahrzeug, wobei die verstellbare Lenksäule (4) eine Lenkspindellagereinheit (2) zur drehbaren Lagerung einer Lenkspindel (18) und eine, zur Befestigung der verstellbaren Lenksäule (4) an einer Karosserie des Kraftfahrzeugs vorgesehene Trageinheit (3) aufweist, **dadurch gekennzeichnet, dass** die verstellbare Lenksäule (4) eine Feststelleinrichtung (1) nach einem der Ansprüche 1 bis 8 zum Feststellen der Lenkspindellagereinheit (2) an der Trageinheit (3) aufweist.

10. Verstellbare Lenksäule (4) nach Anspruch 9, **dadurch gekennzeichnet, dass** das Gegenarretierelement (7) ein Teil, vorzugsweise eine zur Lenkspindellagereinheit (2) benachbart angeordnete Seitenwange (10), der Trageinheit (3) ist.

## Claims

1. A fixing device (1) for fixing a steering spindle bearing unit (2) to a supporting unit (3) of an adjustable steering column (4) for a motor vehicle, wherein the fixing device (1) has at least one clamping device (5) and at least one locking element (6), able to be acted upon by means of the clamping device (5), as well as at least one counter locking element (7), wherein the locking element (6) and the counter locking element (7) are arranged in an engagement position in a closed position of the clamping device (5), and the fixing device (1) has at least one elastic restoring element (8) for restoring the locking element (6) in an open position of the clamping device (5), wherein the fixing device (1) has at least one engagement element (9) which in the closed position of the clamping device (5) engages in a form-locked manner at least one surface (10) of the locking element (6) and/or the counter locking element (7) by means of plastic deformation of this surface (10), **characterized in that** the elastic restoring element (8) is in the form of an elastic deformability of the locking element (6) or the counter locking element (7).

2. A fixing device (1) according to claim 1, **characterized in that** the engagement element (9) is harder than the surface (10) with which it is in engagement in the closed position of the clamping device (5).

3. A fixing device (1) according to claim 1 or 2, **characterized in that** the engagement element (9) is formed on the locking element (6), preferably integrally, and/or **in that** the locking element (6) has a plate-like base body (11).

4. A fixing device (1) according to any one of claims 1 to 3, **characterized in that** the clamping device (5) in its closed position clamps the locking element (6) against the counter locking element (7) in a clamping direction (12) and the engagement element (9) protrudes from a surface (13), facing the counter locking element (7), of the locking element (6) in a direction parallel to the clamping direction (12).

5. A fixing device (1) according to any one of claims 1 to 4, **characterized in that** the engagement element (9) is in the form of nubs.

6. A fixing device (1) according to any one of claims 1 to 5, **characterized in that** at least one spacer (14) is arranged between the locking element (6) and the counter locking element (7) and at a distance from the engagement element (9).

7. A fixing device (1) according to claim 6, **characterized in that** the clamping device (5) has a clamping bolt (15), preferably passing through the locking element (6) and/or the counter locking element (7), wherein the spacer (14) is at a greater distance from the clamping bolt (15) than the distance of the engagement element (9) from the clamping bolt (15).

8. A fixing device (1) according to any one of claims 1 to 7, **characterized in that** the clamping device (12) in its closed position clamps the locking element (6) against the counter locking element (7) in a clamping direction (12) and it has a ram (17), wherein the ram (17) acts upon the locking element (6) in the closed position in clamping direction (12), preferably only in the region of the engagement element (9).

9. An adjustable steering column (4) for a motor vehicle, wherein the adjustable steering column (4) has a steering spindle bearing unit (2) for rotatable mounting of a steering spindle (18) and a supporting unit (3) provided to secure the adjustable steering column (4) to bodywork of the motor vehicle, **characterized in that** the adjustable steering column (4) has a fixing device (1) according to any one of claims 1 to 8 to fix the steering spindle bearing unit (2) to the supporting unit (3).

10. An adjustable steering column (4) according to claim 9, **characterized in that** the counter locking element (7) is a part of the supporting unit (3), preferably a lateral cheek (10) arranged adjacent to the steering spindle bearing unit (2).

## Revendications

1. Dispositif de verrouillage en position (1) pour le verrouillage en position d'un ensemble palier d'arbre de direction (2) à une unité porteuse (3) d'une colonne de direction réglable (4) pour un véhicule automobile, dans lequel le dispositif de verrouillage en position (1) présente au moins un dispositif de serrage (5) et au moins un élément de blocage (6) pouvant être activé par le dispositif de serrage (5) ainsi qu'au moins un élément de contre-blocage (7), dans lequel l'élément de blocage (6) et l'élément de contre-blocage (7) sont disposés dans une position d'engagement dans une position fermée du dispositif de serrage (5), et le dispositif de verrouillage en position (1) présente au moins un élément de rappel élastique (8) pour le rappel de l'élément de blocage (6) dans une position ouverte du dispositif de serrage (5), dans lequel le dispositif de verrouillage en position (1) présente au moins un élément d'engagement (9) qui, dans la position fermée du dispositif de serrage (5) au moyen d'une déformation plastique d'au moins une surface (10) de l'élément de blocage (6) et/ou de l'élément de contre-blocage (7), est en prise par emboîtement avec cette surface (10), **caractérisé en ce que** l'élément de rappel élastique (8) est réalisé sous la forme d'une déformabilité élastique de l'élément de blocage (6) ou de l'élément de contre-blocage (7).

2. Dispositif de verrouillage en position (1) selon la revendication 1, **caractérisé en ce que** l'élément d'engagement (9) est plus dur que la surface (10), avec laquelle il est en prise dans la position fermée du dispositif de serrage (5).

3. Dispositif de verrouillage en position (1) selon la revendication 1 ou 2, **caractérisé en ce que** l'élément d'engagement (9) est réalisé sur l'élément de blocage (6), de préférence en une seule pièce, et/ou **en ce que** l'élément de blocage (6) présente un corps de base en forme de plaque (11).

4. Dispositif de verrouillage en position (1) selon l'une quelconque des revendications 1 à 3, **caractérisé en ce que** le dispositif de serrage (5) serre, dans sa position fermée, l'élément de blocage (6) dans une direction de serrage (12) contre l'élément de contre-blocage (7) et l'élément d'engagement (9) est saillant sur une surface (13) de l'élément de blocage (6) tournée vers l'élément de contre-blocage (7), dans une direction parallèle à la direction de serrage (12).

5. Dispositif de verrouillage en position (1) selon l'une quelconque des revendications 1 à 4, **caractérisé en ce que** l'élément d'engagement (9) est réalisé en forme de boutons.

6. Dispositif de verrouillage en position (1) selon l'une quelconque des revendications 1 à 5, **caractérisé en ce qu'**au moins une pièce d'écartement (14) est disposée entre l'élément de blocage (6) et l'élément de contre-blocage (7) et à distance de l'élément d'engagement (9).

7. Dispositif de verrouillage en position (1) selon la revendication 6, **caractérisé en ce que** le dispositif de serrage (5) présente un boulon de serrage (15), qui traverse de préférence l'élément de blocage (6) et/ou l'élément de contre-blocage (7), dans lequel la pièce d'écartement (14) est plus éloignée du boulon de serrage (15) que l'élément d'engagement (9).

8. Dispositif de verrouillage en position (1) selon l'une quelconque des revendications 1 à 7, **caractérisé en ce que** le dispositif de serrage (12) dans sa position fermée serre l'élément de blocage (6) dans une direction de serrage (12) contre l'élément de contre-blocage (7) et présente un tampon (17), dans lequel le tampon (17) pousse l'élément de blocage (6) dans la position fermée dans la direction de serrage (12), de préférence uniquement, dans la région de l'élément d'engagement (9).

9. Colonne de direction réglable (4) pour un véhicule automobile, dans laquelle la colonne de direction réglable (4) présente un ensemble palier d'arbre de direction (2) pour le support rotatif d'un arbre de direction (18) et une unité porteuse (3) prévue pour la fixation de la colonne de direction réglable (4) à une carrosserie du véhicule automobile, **caractérisée en ce que** la colonne de direction réglable (4) présente un dispositif de verrouillage en position (1) selon l'une quelconque des revendications 1 à 8, pour le verrouillage en position de l'ensemble palier d'arbre de direction (2) à l'unité porteuse (3).

10. Colonne de direction réglable (4) selon la revendication 9, **caractérisée en ce que** l'élément de contre-blocage (7) est une partie, de préférence une joue latérale (10) disposée à proximité de l'ensemble palier d'arbre de direction (2), de l'unité porteuse (3).
